# EUROPEAN PATENT SPECIFICATION

(11) **EP 3 104 551 B1**
(45) Date of publication and mention of the grant of the patent: **21.08.2019**
(21) Application number: 14881451.0
(22) Date of filing: 14.05.2014
(51) Int. Cl.: H04L 12/16, H04W 92/18, H04L 29/06, H04W 4/00

(54) **METHOD FOR PERFORMING A WI-FI DISPLAY SERVICE AND ITS CORRESPONDING DEVICE**
VERFAHREN ZUR DURCHFÜHRUNG VON WI-FI-ANZEIGEDIENST UND VORRICHTUNG DAFÜR
PROCÉDÉ DE RÉALISATION D'UN SERVICE D'AFFICHAGE PAR WI-FI ET DISPOSITIF À CET EFFET

(30) Priority: 06.02.2014 US 201461936332 P
(43) Date of publication of application: 14.12.2016
(73) Proprietor: LG Electronics Inc., Yeongdeungpo-gu Seoul 07336 (KR)
(72) Inventor: LEE, Byungjoo, Seoul 137-893 (KR); PARK, Giwon, Seoul 137-893 (KR); KIM, Dongcheol, Seoul 137-893 (KR)
(74) Representative: Cabinet Plasseraud
(86) International application number: PCT/KR2014/004312
(87) International publication number: WO 2015/119337

(56) References cited:
- WO-A1-2013/109117
- WO-A2-2011/052960
- WO-A2-2012/096546
- WO-A2-2012/105776
- US-A1- 2013 223 539
- US-A1- 2013 238 702
- US-A1- 2013 238 702

## Description

### TECHNICAL FIELD

The present invention relates to a wireless communication system, and more particularly, to a method and apparatus for a power saving operation in a wireless LAN system.

### BACKGROUND ART

Recently, with the development of information communication technology, various wireless communication technologies have been developed. Of the technologies, wireless LAN (WLAN) is the technology that allows home or company or a specific service zone to access Internet wirelessly by using a portable terminal such as a personal digital assistant (PDA), a lap top computer, a portable multimedia player (PMP).

As direct communication technology that may allow devices to be easily connected with each other without a radio access point (AP) basically required in a conventional WLAN system, the introduction of Wi-Fi Direct or Wi-Fi peer-to-peer (P2P) has been discussed. According to Wi-Fi Direct, devices may be connected to each other even without a complicated establishment procedure. Also, Wi-Fi Direct may support a mutual operation for data transmission and reception at a communication speed of a general WLAN system to provide users with various services.

Recently, various Wi-Fi support devices have been used. Of the Wi-Fi support devices, the number of Wi-Fi Direct support devices that enable communication between Wi-Fi devices without AP has been increased. In Wi-Fi Alliance (WFA), technology for the introduction of a platform for supporting various services (for example, Send, Play, Display, Print, etc.) using Wi-Fi Direct link has been discussed. This may be referred to as Wi-Fi Direct Service (WFDS).

According to a display service, among the WFDS, a WFD (Wi-Fi Display) Source and a WFD Sink may search for one another through a WFD IE (Information Element), which is included in probe request and response frames.

U.S. patent application publication No. US 2013/223539 A1 discloses a method for transmitting a video stream between electronic devices.

### DISCLOSURE OF THE INVENTION

### TECHNICAL TASK

The technical task of the present invention is to provide a method of streaming a multimedia file without transcoding in WFD service. Particularly, the technical task of the present invention is to provide a method of streaming a multimedia file without performing decoding and encoding on a multimedia file if a streaming of a multimedia file playable in WFD sink is requested.

Technical tasks obtainable from the present invention are non-limited by the above-mentioned technical task. And, other unmentioned technical tasks can be clearly understood from the following description by those having ordinary skill in the technical field to which the present invention pertains.

### TECHNICAL SOLUTIONS

An object of the present invention corresponds to a method of performing WFD (Wi-Fi Display) service in a first radio source device according to independent claim 1. Another embodiment of the invention corresponds to a WFD source device apparatus according to independent claim 10. Further detailed embodiments are defined in the dependent claims.

### TECHNICAL SOLUTIONS

An object of the present invention is a method of performing WFD (Wi-Fi Display) service in a WFD source device as set forth in the appended claims.

Another object of the present invention is a method of performing WFD (Wi-Fi Display) service in a WFD sink device as set forth in the appended claims.

Another object of the present invention is, in performing WFD (Wi-Fi Display) service, a WFD source device as set forth in the appended claims.

Another object of the present invention is, in performing WFD (Wi-Fi Display) service, a WFD sink device as set forth in the appended claims.

The aforementioned general description of the present invention and the following detailed description of the present invention are exemplary and are provided for description in addition to the appended claims in this disclosure.

### ADVANTAGEOUS EFFECTS

According to the present invention, a method of streaming a multimedia file without transcoding in WFD service and apparatus therefor can be provided. Particularly, according to the present invention, if a streaming of a multimedia file playable in WFD sink is requested, a method of streaming a multimedia file without performing decoding and encoding on a multimedia file and apparatus therefor can be provided.

Effects obtainable from the present invention are non-limited by the above mentioned effect. And, other unmentioned effects can be clearly understood from the following description by those having ordinary skill in the technical field to which the present invention pertains.

### DESCRIPTION OF DRAWINGS

The accompanying drawings, which are included to provide a further understanding of the present invention, illustrate various embodiments of the present invention and together with the descriptions in this specification serve to explain the principle of the invention.
FIG. 1 is a diagram showing an exemplary structure of an IEEE 802.11 system to which the present invention is applicable.
FIG. 2 shows one example of Wi-Fi Direct network.
FIG. 3 is a diagram to describe a process for configuring WFD network.
FIG. 4 is a diagram to describe a neighbor discovery process.
FIG. 5 is a diagram to describe a new aspect of WFD network.
FIG. 6 is a diagram to describe a method of establishing a link for WFD communication.
FIG. 7 is a diagram to describe a method of associating with (or participating in) a communication group currently performing WFD.
FIG. 8 is a diagram to describe a method of establishing a link for WFD communication.
FIG. 9 is a diagram to describe a method of establishing a link for associating with WFD communication group.
FIG. 10 is a diagram to describe WFDS framework component.
FIG. 11 is a flowchart to describe a process for establishing WED session between WFD source and WFD sink.
FIG. 12 is a diagram to describe WFD capability negotiation procedure.
FIG. 13 is a diagram to describe WFD session establishment and video/audio streaming procedure.
FIG. 14 is a diagram to describe one example of transition between real-time encoded mode and non-transcoded mode.
FIG. 15 is a diagram to show a detailed example that an operating mode between WFD source and WFD sink is switched to a non-transcoded mode from a real-time encoded mode.
FIG. 16 is a diagram to show a detailed example that an operating mode between WFD source and WFD sink is changed into a real-time encoded mode from a non-transcoded mode.
FIG. 17 is a diagram to describe one example of performing a handover into DNLA from WFD service.
FIG. 18 is a diagram to show one example of starting DNLA after pausing WFD service.
FIG. 19 is a diagram to show one example of resuming WFD service.
FIG. 20A and FIG. 20B are diagrams to describe a process for checking whether WFD sink has capability of transition to DNLA from WFD service in a capability negotiation procedure.
FIG. 21 is a block diagram for configurations of a radio device according to one embodiment of the present invention.

### BEST MODE FOR INVENTION

Reference will now be made in detail to the preferred embodiments of the present invention, examples of which are illustrated in the accompanying drawings. In the following detailed description of the invention includes details to help the full understanding of the present invention. Yet, it is apparent to those skilled in the art that the present invention can be implemented without these details.

Occasionally, to prevent the present invention from getting unclear, structures and/or devices known to the public are skipped or can be represented as block diagrams centering on the core functions of the structures and/or devices. Wherever possible, the same reference numbers will be used throughout the drawings to refer to the same or like parts.

Specific terminologies used for the following description may be provided to help the understanding of the present invention. And, the use of the specific terminology may be modified into other forms within the scope of the technical idea of the present invention.

Embodiments of the present invention may be supported by the disclosed standard documents of at least one of wireless access systems including IEEE 802 system, 3GPP system, 3GPP LTE system, LTE-A (LTE-Advanced) system and 3GPP2 system. In particular, the steps or parts, which are not explained to clearly reveal the technical idea of the present invention, in the embodiments of the present invention may be supported by the above documents. Moreover, all terminologies disclosed in this document may be supported by the above standard documents.

The following description may apply to various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented with such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802.20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. The 3GPP LTE adopts OFDMA in downlink (hereinafter abbreviated) DL and SC-FDMA in uplink (hereinafter abbreviated UL). And, LTE-A (LTE-Advanced) is an evolved version of 3GPP LTE.

For clarity, the following description mainly concerns IEEE 802.11 system, by which the technical features of the present invention may be non-limited.

### Structure of WLAN System

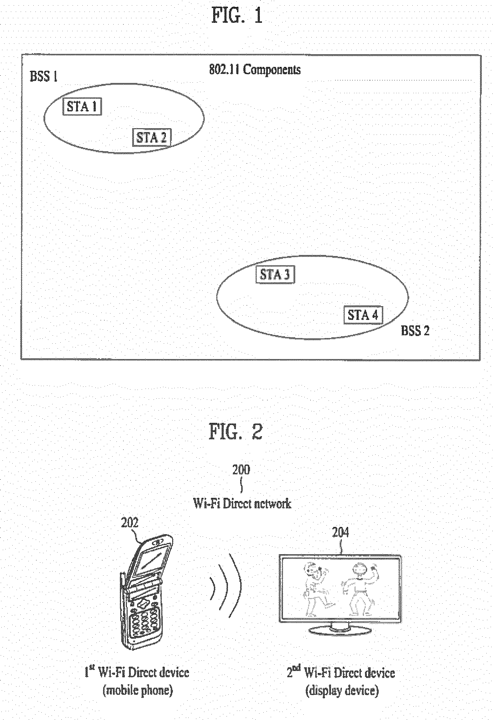

FIG. 1 illustrates a diagram for an example of a structure of IEEE 802.11 system to which the present invention is applicable.

IEEE 802.11 structure may include a plurality of components and WLAN supportive of transparent STA mobility for an upper layer can be provided by interactions of the components. A basic service set (BSS) may correspond to a basic configuration block in IEEE 802.11 LAN. FIG. 1 shows one example that two basic service sets (BSS 1 and BSS 2) exist and that 2 STAs are included as members of each BSS. In particular, STA 1 and STA 2 are included in the BSS 1 and STA 3 and STA 4 are included in the BSS 2. In FIG. 1, an oval indicating the BSS can be understood as indicating a coverage area in which the STAs included in the corresponding BSS maintain communications. This area may be named a basic service area (BSA). Once the STA moves away from the BSA, it is unable to directly communicate with other STAs within the corresponding BSA.

A BSS of a most basic type in IEEE 802.11 LAN is an independent BSS (IBSS). For instance, IBSS can have a minimum configuration including 2 STAs only. Moreover, the BSS (e.g., BSS 1 or BSS 2) shown in FIG. 1, which has the simplest configuration and in which other components are omitted, may correspond to a representative example of the IBSS. Such a configuration is possible if STAs can directly communicate with each other. The above-configured LAN is not configured by being designed in advance but can be configured under the necessity of LAN. And, this may be called an ad-hoc network.

If an STA is turned on/off or enters/escapes from a BSS area, membership of the STA in a BSS can be dynamically changed. In order to obtain the membership in the BSS, The STA can join the BSS using a synchronization procedure. In order to access all services of the BSS based structure, the STA should be associated with the BSS. This association may be dynamically configured or may include a use of a DSS (distribution system service).

### Layer structure

The operation of the STA which is operated in the wireless LAN system may be described in view of layer structure. In aspect of device configuration, layer structure may be implemented by a processor. The STA may have a structure of a plurality of layers. For example, a layer structure handled by the 802.11 standard document mainly includes a MAC sublayer and a physical (PHY) layer on a data link layer (DLL). The PHY layer may include a physical layer convergence procedure (PLCP) entity, a physical medium dependent (PMD) entity, etc. The MAC sublayer and the PHY layer conceptionally include management entities called MAC sublayer management entity (MLME) and physical layer management entity (PLME), respectively. These entities provide a layer management service interface that operates a layer management function.

In order to provide exact MAC operation, an SME (Station Management Entity) is present within each STA. The SME is a layer independent entity that may be viewed as residing in a separate management plane or as residing "off to the side." The exact functions of the SME are not specified in this document, but in general this entity may be viewed as being responsible for such functions as the gathering of layer-dependent status from the various layer management entities (LMEs), and similarly setting the value of layer-specific parameters. The SME may perform such functions on behalf of general system management entities and may implement standard management protocols.

The aforementioned entities interact in various ways. For example, the entities may interact by exchanging GET/SET primitives. The primitive means a set of elements or parameters related to a specific object. XX-GET.request primitive is used for requesting the value of the given MIB attribute (management information base attribute). XX-GET.confirm primitive is used for returning the appropriate MIB attribute value if status is "success," otherwise returning an error indication in the Status field. XX-SET.request primitive is used for requesting that the indicated MIB attribute be set to the given value. If this MIB attribute implies a specific action, this requests that the action be performed. And, XX-SET.confirm primitive is used such that, if status is "success," this confirms that the indicated MIB attribute has been set to the requested value, otherwise it returns an error condition in the status field. If this MIB attribute implies a specific action, this confirms that the action has been performed.

Also, the MLME and the SME may exchange various MLME_GET/SET primitives through MLME_SAP (Service Access Point). Also, various PLME_GET/SET primitives may be exchanged between PLME and SME through PLME_SAP, and may be exchanged between the MLME and PLME through MLME-PLME_SAP.

### Evolution of wireless LAN

Standards for Wireless Local Area Network (WLAN) technology have been developed by Institute of Electrical and Electronics Engineers (IEEE) 802.11 group. IEEE 802.1 la and 802.11b use an unlicensed band at 2.4 GHz or 5 GHz. IEEE 802.1 1b provides a transmission rate of 11 Mbps and IEEE 802.11a provides a transmission rate of 54 Mbps. IEEE 802.11g applies Orthogonal Frequency-Division Multiplexing (OFDM) at 2.4 GHz to provide a transmission rate of 54 Mbps. IEEE 802.1 In may use Multiple Input Multiple Output (MIMO)-OFDM, and provide a transmission rate of 300 Mbps. IEEE 802.1 In may support a channel bandwidth up to 40 MHz to provide a transmission rate of 600 Mbps.

A direct link setup (DLS) related protocol under the environment according to IEEE 802.1 1e is based on QBSS (Quality BSS (basic service set)) that BSS supports QoS (Quality of Service). In QBSS, AP as well as non-AP STA is a QAP (Quality AP) that supports QoS. However, under the WLAN environment (for example, WLAN environment according to IEEE 802.11a/b/g) which is currently commercialized, although the non-AP STA is a QSTA (Quality STA) that supports QoS, the AP is likely to be a legacy AP that fails to support QoS. As a result, there is a limitation that DLS service cannot be used even in case of the QSTA under the WLAN environment which is currently commercialized.

Tunneled direct link setup (TDLS) is a wireless communication protocol which is newly suggested to solve such a limitation. TDLS, although not supporting QoS, enables QSTAs to set a direct link even under the WLAN environment such as IEEE 802.1 1a/b/g which is currently commercialized and set a direct link even in case of a power save mode (PSM). Accordingly, TDLS prescribes all the procedures for enabling QSTAs to set a direct link even at BSS managed by the legacy AP. Hereinafter, a wireless network that supports TDLS will be referred to as a TDLS wireless network.

### Wi-Fi Direct network

The WLAN according to the related art has mainly handled the operation of an infrastructure BSS that a radio access point (AP) functions as a hub. The AP performs a physical layer support function for wireless/wire connection, a routing function for devices on the network, and service provision for adding/removing a device to/from the network. In this case, devices within the network are not directly connected with each other but connected with each other through the AP.

As technology for supporting direct connection between devices, enactment of Wi-Fi Direct standard has been discussed.

FIG. 2 illustrates a diagram showing an exemplary Wi-Fi Direct network. The Wi-Fi Direct network is a network that enables Wi-Fi devices to perform device-to-device (D2D) (or peer-to-peer (P2P)) communication even without association with a home network, office network and hot spot network, and has been suggested by Wi-Fi Alliance. Hereinafter, Wi-Fi Direct based communication will be referred to as Wi-Fi Direct D2D communication (simply D2D communication) or Wi-Fi Direct P2P communication (simply, P2P communication). Also, a device that performs Wi-Fi Direct P2P will be referred to as Wi-Fi Direct P2P device, simply referred to as P2P device or Peer device.

Referring to FIG. 2, the Wi-Fi Direct network (200) may include at least one Wi-Fi device that includes a first P2P device (202) and a second P2P device (204). The P2P device may include Wi-Fi supporting devices, for example, a display device, a printer, a digital camera, a projector, a smart phone, etc. In addition, the P2P device may include a non-AP STA and an AP STA. In this example, the first P2P device (202) is a smart phone, and the second P2P device (204) is a display device. The P2P devices of the Wi-Fi Direct network may directly be interconnected. In more detail, P2P communication may mean that a signal transmission path between two P2P devices is directly configured in the corresponding P2P devices without passing through a third device (e.g., AP) or a legacy network (e.g., a network accessed to WLAN through an AP). In this case, a signal transmission path directly configured between two P2P devices may be limited to a data transmission path. For example, P2P communication may mean that a plurality of non-STAs transmit data (e.g., voice, image, text information, etc.) without passing through the AP. A signal transmission path for control information (e.g., resource allocation information for P2P configuration, wireless device identification information, etc.) may directly be configured between P2P devices (e.g., non-AP STA to non-AP STA, non-AP STA to AP), may be configured between two P2P devices (e.g., non-AP to non-AP STA) through the AP, or may be configured between the AP and the corresponding P2P device (e.g., AP to non-AP STA #1, AP to non-AP STA #2).

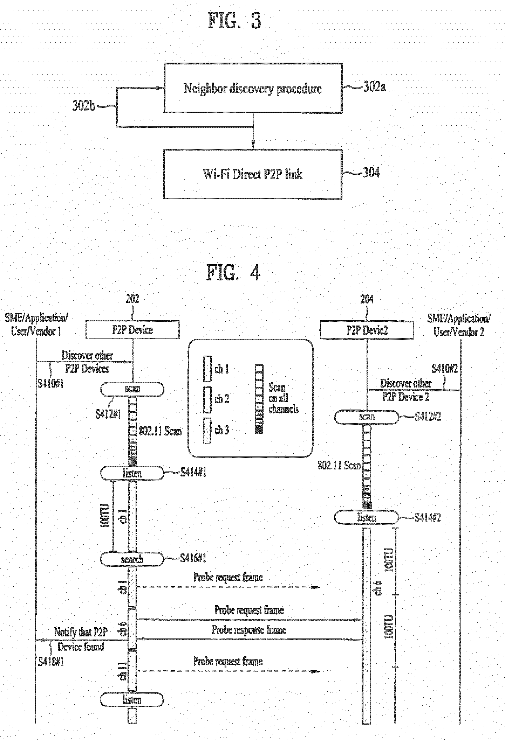

FIG. 3 illustrates a diagram showing a method for configuring a Wi-Fi Direct network.

Referring to FIG. 3, the Wi-Fi Direct network setup procedure may be largely classified into two procedures. The first procedure is a neighbor discovery (ND) procedure (S302a), and the second procedure is a P2P link configuration and communication procedure (S304). Through the neighbor discovery procedure, the P2P device (e.g., 202 of FIG. 2) searches for another neighbor P2P device (e.g., 204 of FIG. 2) within (its own radio) coverage, and may obtain information required for association (e.g., pre-association) with the corresponding P2P device. In this case, the pre-association may mean a second layer pre-association in a radio protocol. For example, information required for the pre-association may include identification information of the neighbor P2P device. The neighbor discovery procedure may be carried out per available radio channel (S302b). Afterwards, the P2P device (202) may perform Wi-Fi Direct P2P link configuration/communication with another P2P device (204). For example, after the P2P device (202) is associated with a peripheral P2P device (204), the P2P device (202) may determine whether the corresponding P2P device (204) is a P2P device incapable of satisfying service requirements of a user. To this end, after the P2P device (202) is second layer pre-associated with the peripheral P2P device (204), the P2P device (202) may search for the corresponding P2P device (204). If the corresponding P2P device (204) does not satisfy service requirements of the user, the P2P device (202) may sever the second layer association configured for the corresponding P2P device (204), and may configure the second layer association with another P2P device. By contrast, if the corresponding P2P device (204) satisfies the service requirements of the user, the two P2P devices (202 and 204) may transmit and receive signals through a P2P link.

FIG. 4 illustrates a diagram showing a neighboring discovery procedure. The example of FIG. 4 may be understood as an operation between the P2P device (202) and the P2P device (204) shown in FIG. 3.

Referring to FIG. 4, the neighbor discovery procedure of FIG. 3 may be initiated by indication of station management entity (SME)/application/user/vendor (S410), and may be classified into a scanning step (S412) and finding steps (S414 to S416). The scanning step (S412) may include the operation for scanning all available RF channels according to 802.11 schemes. Through the above-mentioned operation, the P2P device may confirm the best operation channel. The finding steps (S414 to S416) may include a listening mode (S414) and a search mode (S416). The P2P device may alternately repeat the listening mode (S414) and the search mode (S416). The P2P devices (202 and 204) may perform active search by using a probe request frame in the search mode (S416). For rapid search, the search range may be limited to social channels denoted by Channels #1, #6, #11 (2412, 2437, 2462 MHz). In addition, the P2P devices (202 and 204) may select only one channel from three social channels in the listening mode (S414), and maintain a reception status. In this case, if the other P2P device (e.g., 202) receives the probe request frame transmitted in the search mode, the P2P device (e.g., 204) generates a probe response frame in response to the received probe request frame. A time of the listening mode (S414) may be given at random (e.g., 100, 200, 300 time unit (TU)). The P2P devices continuously repeat the search mode and the reception mode so that they may reach a common channel. After the P2P device discovers another P2P device, the P2P device may discover/exchange a device type, a manufacturer, or a familiar device name by using the probe request frame and the probe response frame such that the P2P device may selectively be coupled to the corresponding P2P device. If the P2P device discovers the peripheral P2P device and obtains necessary information through the neighbor discovery procedure, the P2P device (e.g., 202) may notify SME/application/user/vendor of the P2P device discovery (S418).

Presently, P2P may be mainly used for semi-static communication such as remote printing, photo sharing, etc. However, due to generalization of Wi-Fi devices and location based services, P2P availability is gradually increased. For example, it is expected that the P2P device will actively be used for social chatting (for example, wireless devices subscribed to Social Network Service (SNS) recognize radio devices located in a neighboring region on the basis of the location based service and transmit and receive information), location-based advertisement provision, location-based news broadcasting, and game interaction between wireless devices. For convenience of description, such P2P application will hereinafter be referred to as new P2P application.

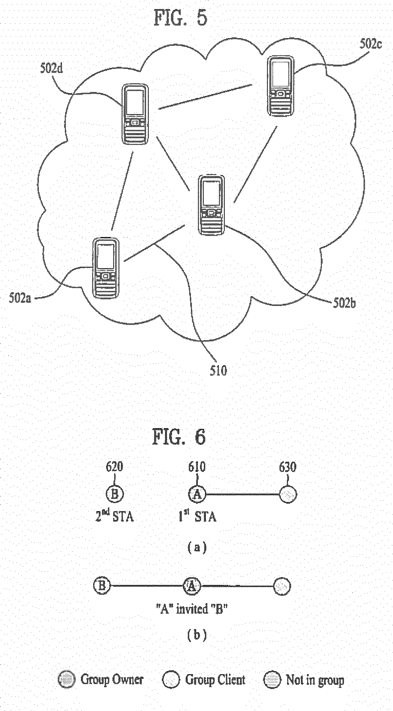

FIG. 5 illustrates a diagram showing a new aspect of a Wi-Fi Direct network.

The example of FIG. 5 may be understood as Wi-Fi Direct network aspect for use in the case in which new P2P application (e.g., social chatting, location-based service provision, game interaction, etc.) is applied.

Referring to FIG. 5, a plurality of P2P devices (502a-502d) performs P2P communication (510) in the Wi-Fi Direct network, P2P device(s) constituting the Wi-Fi Direct network may be changed at any time due to movement of the P2P device(s), and a new Wi-Fi Direct network may be dynamically generated or deleted within a short time. As described above, characteristics of the new P2P application indicate that P2P communication may dynamically be performed and terminated within a short time among a plurality of P2P devices in the dense network environment.

FIG. 6 illustrates a diagram showing a method for configuring a link for Wi-Fi Direct communication.

As shown in FIG. 6a, a first STA (610) (hereinafter, referred to as "A") is being operated as a group owner during conventional Wi-Fi Direct communication. If the A (610) discovers a second STA (620) (hereinafter, referred to as "B"), which is a new Wi-Fi Direct communication target and does not perform Wi-Fi Direct communication, during communication with a group client (630) of conventional Wi-Fi Direct communication, the A (610) tries link setup with the B (620). In this case, new Wi-Fi Direct communication is Wi-Fi Direct communication between the A (610) and the B (620), and since the A is a group owner, the A may perform communication setup separately from communication of the conventional group client (630). Since one Wi-Fi Direct group may include one group owner and one or more group clients, as shown in FIG. 6b, a Wi-Fi Direct link may be set as the A (610) which is one group owner is satisfied. In this case, the A (610) invites the B (620) to the conventional Wi-Fi Direct communication group, and in view of Wi-Fi Direct communication characteristic, WFD communication between the A (610) and the B (620) and between the A (610) and the conventional group client (630) may be performed. Wi-Fi Direct communication is supported selectively based on the device's capability.

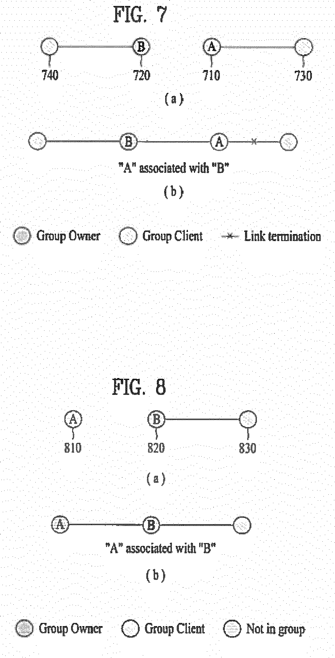

FIG. 7 illustrates a diagram showing a method for associating with a communication group that performs Wi-Fi Direct.

As shown in FIG. 7a, a first STA (710) (hereinafter, referred to as "A") is performing communication as a group owner for a group client (730), and a second STA (720) (hereinafter, referred to as "B") is performing communication as a group owner for a group client (740). As shown in FIG. 7b, the A (710) may terminate conventional Wi-Fi Direct communication and may perform association with a Wi-Fi Direct communication group to which the B (720) belongs. Since the A (710) is a group owner, the A (710) becomes a group client. Preferably, the A (710) terminates the conventional Wi-Fi Direct communication before requesting association with the B (720).

FIG. 8 illustrates a diagram showing a method for configuring a link for Wi-Fi Direct communication.

As shown in FIG. 8a, a second STA (820) (hereinafter, referred to as "B") is being operated as a group owner during conventional Wi-Fi Direct communication. If the B (820) is performing conventional Wi-Fi Direct communication with a group client (830), a first STA (810) (hereinafter, referred to as "A"), which does not perform the Wi-Fi Direct communication, discovers the B (820) and tries link setup for new Wi-Fi Direct communication with the B (820). In this case, if the B (820) accepts link setup, a new Wi-Fi Direct communication link between the A (810) and the B (820) is set, and the A (810) is operated as a client of conventional Wi-Fi Direct group of the B (820). This case corresponds to the case where the A (810) performs association with the Wi-Fi Direct communication group of the B (820). The A (810) may only perform Wi-Fi Direct communication with the B (820) which is a group owner, and Wi-Fi Direct communication between the A (810). Wi-Fi Direct communication is supported selectively based on the device's capability.

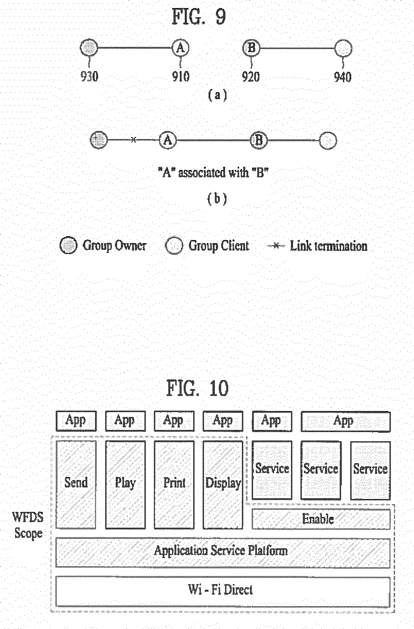

FIG. 9 illustrates a diagram showing a method for configuring a link that is associated with a Wi-Fi Direct communication group.

As shown in FIG. 9a, a first STA (910) (hereinafter, referred to as "A") is performing Wi-Fi Direct communication as a group client for a group owner (930). At this time, the A (910) discovers a second STA (920) (hereinafter, referred to as "B"), which is performing communication as a group owner for a group client (940) of another Wi-Fi Direct communication, and terminates a link with the group owner (930). And, the A (910) may perform association with Wi-Fi Direct of the B (920).

### Wi-Fi Direct Service (WFDS)

Wi-Fi Direct is the network connection standard technology defined to include an operation of a link layer. Since the standard of an application operated in an upper layer of a link configured by Wi-Fi Direct is not defined, it is difficult to support compatibility in the case that the application is driven after devices which support Wi-Fi Direct are interconnected. To solve this problem, standardization of the operation of the upper layer application called Wi-Fi Direct Service (WFDS) has been discussed by the Wi-Fi Alliance (WFA).

FIG. 10 illustrates a diagram illustrating WFDS framework components.

A Wi-Fi Direct layer of FIG. 10 means a MAC layer defined by the Wi-Fi Direct standard. The Wi-Fi Direct layer may include software compatible with the Wi-Fi Direct standard. Wireless connection may be configured below the Wi-Fi Direct layer by a physical layer (not shown) compatible with WiFi PHY layer. A platform called an ASP (Application Service Platform) is defined above the Wi-Fi Direct layer.

The ASP is a logical entity that implements functions required for services. The ASP is a common shared platform, and may process tasks such as device discovery, service discovery, ASP session management, connection topology management and security between an application layer above the ASP and the Wi-Fi Direct layer below the ASP.

A service layer is defined above the ASP. The service layer includes use case specific services. The WFA defines four basis services, Send, Play, Display and Print services. The four basic services defined in the WFA will be described briefly. First of all, Send means service and application that may perform file transfer between two WFDS devices. The Send service may be referred to as a file transfer service (FTS) in that it is intended for file transfer between peer devices. Play means a service and application that shares or streams audio/video (A/V), photo, music, etc. based on DLNA (Digital Living Network Alliance) between two WFDS devices. Print means a service and application that enables documents and photos to be output between a device having contents such as documents, photos, and so on, and a printer. Display means a service and application that enables screen sharing between a Miracast source and a sink of WFA.

An enable API (Application Program Interface) shown in FIG. 10 is defined to use an ASP common platform in the case that a third party application in addition to basic service defined by the WFA is supported. The service defined for the third party application may be used by one application only, or may be used generally (or commonly) by various applications.

Hereinafter, for convenience of description, the service defined by the WFA will be referred to as a WFA service, and the service newly defined by the third party not the WFA will be referred to as an enable service.

The application layer may provide a user interface (UI), and serves to express information to be recognized by the user and transfer an input of the user to a lower layer.

Based upon the description provided above, among the WFDS, the Display service will hereinafter be described in more detail.

### Wi-Fi Display

Among the WFDS, the Display service refers to a service and application that enable screen sharing between P2P devices. A P2P device using the Display Service may be referred to as a WFD device, and, among the WFD devices, a device supporting streaming of multimedia content through a device P2P link may be referred to as a Wi-Fi Display (WFD) Source, and a device receiving from the WFD Source device and through the P2P link performing rendering may be referred to as a WFD Sink.

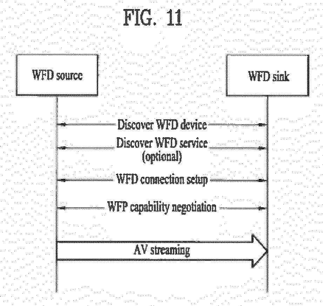

FIG. 11 illustrates a procedure for establishing a WFD session between a WFD source and a WFD sink. The WFD source and the WFD sink may discover the presence (or existence) of one another through an initial WFD Device Discovery prior to performing WFD connection setup. More specifically, the WFD devices may recognize the presence of one another through a probe request frame and a probe response frame each including a WFD information element (WFD IE). The WFD information element (WFD IE) may include basic information for establishing an optimal connection between the WFD devices, such as device type, device status, and so on. When a WFD device receives a probe request frame including a WFD IE, the WFD device may transmit a probe response frame including its WFD IE as a response to the received probe request frame.

When a WFD device is inter-connected to an AP, and in case the WFD device operates as a Wi-Fi P2P device, two or more Wi-Fi transmitters/receivers (or transceivers) logically operates on a single physical device. At this point, in order to perform the WFD Device Discovery, any one of the Wi-Fi transmitters/receivers (or transceivers) mentioned above may be used. In addition to the WFD IE, a P2P Information Element (P2P IE) may also be included in the probe request frame for the discovery of WFD devices, and this may be decoded by the Wi-Fi transmitters/receivers (or transceivers).

Thereafter, prior to performing WFD connection setup, the WFD source and the WFD sink may search for (or discover) a service capability of one another. More specifically, when any one of the WFD devices transmits a service discovery request frame, which includes a WFD ability as its information subelement, another WFD device may transmit a service discovery response frame, which includes its own WFD ability as its information subelement, as a response to the service discovery request frame. The service discovery procedure corresponds to an optional (or selective) procedure, and, herein, a WFD device supporting the service discovery procedure may perform the service discovery procedure with a searched (or discovered) WFD device, which also supports the service discovery procedure. In order to perform the service discovery procedure, information indicating whether or not the WFD device is equipped with the ability (or capability) to support the service discovery procedure may be included in the probe request frame and response frame, which are used for the service discovery procedure.

Thereafter, the WFD source or the WFD sink may select a peer WFD device for the WFD connection setup. A peer WFD device, which is to carry out the WFD connection setup, may be selected by a user input, or a peer WFD device, which is to carry out the WFD connection setup, may be automatically selected in accordance with a policy.

Subsequently, the WFD device may select a method for performing WFD connection setup with the selected peer WFD device. More specifically, the WFD device may establish WFD connection with any one Connectivity Scheme among Wi-Fi P2P and TDLS. The WFD devices may decide a connectivity scheme based upon an inter-connected BSSID subelement, which is delivered (or transmitted) along with Preferred Connectivity information and WFD information element.

If WFD setup is successfully completed between WFD devices using Wi-Fi P2P or TDLS, the WFD device can proceed to WFD capability negotiation. Through the WFD capability negotiation, WFD source and WFD sink can confirm at least one of mutually supported codec, profile information of codec, level information of codec and resolution information of codec.

Particularly, by exchanging messages using RTSP (real-time streaming protocol), WFD source and WFD sink can determine a parameter set for defining audio/video payload during WFD session. In the course of the WFD capability negotiation procedure, messages RTSP M1 to RTSP M4 can be exchanged.

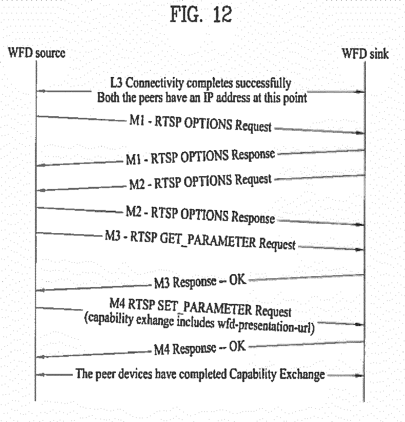

For instance, FIG. 12 is a diagram to describe WFD capability negotiation procedure. Referring to FIG. 12, first of all, WFD source can send RTSP M1 request message for initiating RTSP procedure and WFD capability negotiation. The RTSP M1 request message may include RTSP OPTIONS request for determining RTSP methods set supported by WFD sink. If the RTSP M1 request message is received, the WFD sink can make a response with RTSP M1 response message in which RTSP methods supported by the WFD sink are listed.

After successful exchange of RTSP M1 messages, the WFD sink can send RTSP M2 request message for determining RTSP methods set supported by the WFD source. If the RTSP M2 request message is received, the WFD source can make a response with RTSP M2 response message in which RTSP methods supported by the WFD source are listed.

After the successful exchange of RTSP M2 messages, the WFD source can send RTSP M3 request message (RTSP GET_PARAMETER request message) in which a list of WFD capabilities interested by the WFD source is specified. If the RTSP M3 request message is received, the WFD sink can make a response with RTSP M3 response message (RTSP GET_PARAMETER response message).

Based on the RTSP M3 response message, the WFD source determines an optimal parameter set to use during WFD session and is able to send RTSP M4 request message (RTSP SET PARAMETER request message) including a parameter set, which will be used between the WFD source and the WFD sink, to the WFD sink. If the RTSP M4 request message is received, the WFD sink can make a response with RTSP M4 response message (RTSP GET_PARAMETER response message).

If the WFD capability negotiating step is successfully completed, the WFD source and device establish WFD session (or miracast session) and video/audio content can be streamed from the WFD source to the WFD sink.

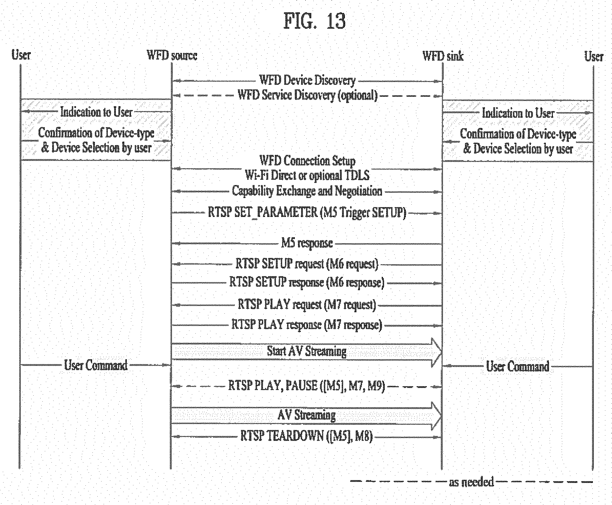

For instance, FIG. 13 is a diagram to describe WFD session establishment and video/audio streaming procedure.

WFD source can send RTSP M5 request message (RSTP SET_PARAMETER request message) including trigger parameter SETUP to WFD sink. If the RTSP M5 request message is received, WFD sink can make a response with RTSP M5 response message (RTSP SET_PARAMETER response message).

If the RTSP M5 messages including the trigger parameter SETUP are successfully exchanged, the WFD sink can send RTSP M6 request message (RSTP SETUP request message) to the WFD source. If the RTSP M6 request message is received, the WFD source can make a response with RTSP M6 response message (RTSP SETUP response message). If a status code of the RTSP M6 response message indicates 'OK', it may mean that the RTSP session has been successfully established.

Once the RTSP session is established, the WFD source sends RTSP M5 message for triggering a transmission of RTSP PLAY request message (RTSP M7 request message) or RTSP TEARDOWN request message (RTSP M8 request message) to the WFD sink. And, the WFT sink can send RTSP M8 message (RTSP TEARDOWN message) for tearing down the RTSP session between the WFD source and the WFD sink.

After the successful exchange of the RTSP M6 message, the WFD sink can send RTSP M7 request message (RTSP PLAY request message) to the WFD source to notify that it is ready to receive RTSP stream. The WFD source can make a response with RTSP M7 response message (RTSP PLAY response message). If a status code of the RTSP M7 response message indicates 'OK', it may mean that the WFD session has been successfully established.

Once the WFD session is established, the WFD source can send RTSP M3 request message (RTSP GET_PARAMETER request message) for obtaining capability for at least one RTSP parameter supported by the WFD sink, RTSP M4 request message for setting at least one RTSP parameter value corresponding to the WFD session for capability renegotiation between the WFD source and the WFD sink for AV (audio/video) format update, RTSP M5 request message for triggering the WFD sink to send RTSP PAUSE request message (RTSP M9 request message), RTSP M12 request message indicating that the WFD source enters WFD standby mode, RTSP M14 request message for selecting an input type to be used by UIBC, an input device and other parameters, RTSP M15 request message for enabling or disabling UIBC and the like to the WFD sink.

Having received the above-listed RTSP request messages from the WFD source, the WFD sink can respond with RTSP response message.

Once the WFD session is established, the WFD sink can send RTSP M7 request message (RTSP PLAY request message) for starting (or resuming) the paused audio/video streaming, RTSP M9 request message (RTSP PAUSE request message) for pausing the audio/video streaming from the WFD source to the WFD sink, RTSP M10 request message for requesting the WFD source to change an audio rendering device, RTSP M11 request message instructing a change of an active connector type, RTSP M12 request message indicating that the WFD sink has entered WFD standby mode, RTSP M13 request message requesting the WFD source to refresh IDR, RTSP M14 request message for selecting an input type to be used by UIBC, an input device and other parameters, RTSP M15 request message for enabling or disabling the UIBC and the like to the WFD source.

Having received the above-listed RTSP request messages from the WFD sink, the WFD source can respond with RTSP response message.

As the WFD session is established, if audio/video streaming starts, the WFD source and the WFD sink can proceed to the audio/video streaming using codec supported in common by both of the WFD source and the WFD sink. As the codec supported in common by the WFD source and sink is used, it is able to secure interoperability between them.

For instance, if both of the WFD source and the WFD sink support LPCM (linear PCM (pulse code modulation) audio) codec and H.264 codec, audio and video can be streamed through LPCM codec and H.264 codec, respectively. Of course, other codec can be used for the audio/video streaming as well as LPCM codec and H.264 codec.

For clarity of the following description, audio/video codec supported in common by LPCM codec and H.264 codec shall be named 'common codec'.

As the streaming through the WFD session is performed, the WFD source generally encodes its real-time play screen by the common codec and then transmits encoded data to the WFD sink. In case of streaming a video file, the WFD source decodes the video file, outputs a play screen of the video file to a display unit, encodes an output of the display unit by the common codec, and then transmits encoded data to the WFD sink.

In particular, in order to perform the streaming of a multimedia file such as a music file, a video file or the like, the WFD source can perform transcoding in a manner of decoding the multimedia file and then encoding decoded data by common codec.

Yet, if a multimedia file to be streamed is playable by the WFD sink, it may be more efficient that the WFD source transmits the multimedia file by skipping a step of transcoding the multimedia file.

For instance, Table 1 shows the comparison of effects depending on performing transcoding or not in streaming a video file of 1080p resolution encoded by H.264.

**[Table 1]**

| Classification | Real-time encoded streaming (e.g., Miracast 1.0) | Non-transcoded transmission [Http based streaming (e.g., DLNA)] |
|---|---|---|
| Necessity for transcoding | Necessary (Re-encoding in H.264 video format is necessary despite that video file is encoded by H.264) | Unnecessary |
| Power consumption (by Tx) | 2100∼3700mWh | 1850mWh |
| Overheat | Overheat generated from decoding and encoding of video file | Normal range |
| Video quality | Image quality degraded due to transcoding | Original copy quality maintained |

In case of performing streaming without transcoding, the following effects can be provided. First of all, a transmission delay is reduced by a time taken for decoding and encoding of multimedia file, overheat of the WFD source can be suppressed, and power efficiency of the WFD source can be raised.

Therefore, the present invention intends to propose a method of streaming a multimedia file without transcoding of the multimedia file in the course of WFD service.

### Mode Transition in WFD

Once WFD session is established, WFD source encodes its real-time output screen by common codec and is able to send encoded data to WFD sink. In doing so, if a play of a multimedia file playable by the WFD sink is requested, the WFD source can send the play requested multimedia file to the WFD sink instead of performing transcoding (i.e., conversion by common codec) of the multimedia file.

In particular, during WFD service, the WFD source and the WFD sink can operate in real-time encoded mode for streaming real-time output screen of the WFD source, or may operate in non-transcoded mode for streaming a multimedia file without transcoding.

At least one of the WFD source and the WFD sink can request a transition between the real-time encoded mode and the non-transcoded mode according to attribute of a play requested multimedia file.

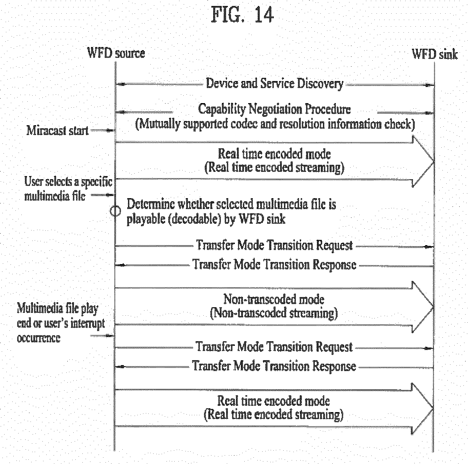

FIG. 14 is a diagram to describe one example of transition between real-time encoded mode and non-transcoded mode. As a device and service discovery procedure and a capability negotiation procedure proceed, if WFD session is created, WFD source and WFD sink can perform streaming in real-time encoded mode. In particular, if the WFD source encodes its output screen by common codec and then sends it to the WFD sink, the WFD sink decodes the encoded data received from the WFD source and is then able to output the decoded data.

Thereafter, if a user input of requesting a play of a multimedia file is received, the WFD source can determine whether the play requested multimedia file is playable by the WFD sink. In particular, the WFD source can determine whether the play requested multimedia file can be played by the WFD sink based on codec information supported by the WFD sink. For instance, to this end, the WFD source can obtain video and audio codec information supported by the WFD sink from the WFD service discovery procedure or the WFD capability negotiation procedure described with reference to FIG. 11. If the play requested multimedia file is a video file, the WFD source may determine whether the multimedia file is playable by the WFD sink in further consideration of profile and level information of codec in addition.

If the play requested multimedia file is playable by the WFD sink, the WFD source can request the WFD sink to switch to the no-transcoded mode from the real-time encoded mode. If the WFD sink accepts the operation mode transition request made by the WFD source, the WFD source can send the multimedia file to the WFD sink.

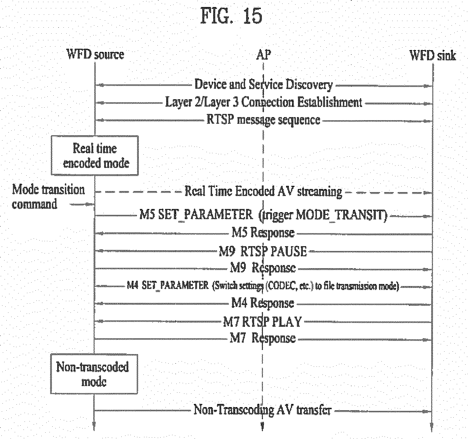

FIG. 15 is a diagram to show a detailed example that an operating mode between WFD source and WFD sink is switched to a non-transcoded mode from a real-time encoded mode.

While operating in real-time encoded mode, if a user input of requesting a play of a multimedia file is received, WFD source can determine whether the play requested multimedia file is playable by WFD sink.

If the play requested multimedia file is not playable by the WFD sink (e.g., the multimedia file is compressed by codec not supported by the WFD sink, or the multimedia file has resolution not supported by the WFD sink), the WFD source can stream the multimedia file through transcoding. In particular, the WFD source decodes the multimedia file, encodes decoded data by common codec, and is able to send the encoded data to the WFD sink.

On the contrary, if the play requested multimedia file is playable by the WFD sink, the WFD source can send RTSP M5 request message for requesting mode transition. To this end, between the WFD source and the WFD sink, a new method called 'mode transition (MODE_TRANSIT) for triggering mode transition can be defined.

Having received the RTSP M5 request message including the mode transition method, the WFD sink responds with RTSP M5 response message and is able to send RTSP M9 request message (RTSP PAUSE request message) for pausing real-time streaming to the WFD source.

If the RTSP M9 request message is received, the WFD source responds with RTSP M9 response message and is able to pause the real-time streaming (i.e., pauses the streaming of a real-time output screen of the WFD source). If the real-time streaming is paused, the WFD source can send RTSP M4 request message (RTSP SET_PARAMETER request message) indicating parameters, which are changed according to the transition to the non-transcoded mode, to the WFD sink. In the RTSP M4 request message, information of codec of the multimedia file and a transport protocol (e.g., TCP/UDP, etc.) used in sending the multimedia file can be included.

If the RTSP M4 request message is received, the WFD sink can respond with RTSP M4 response message. Thereafter, the WFD sink can send RTSP M7 request message (RTSP PLAY request message) for requesting a transmission start of the multimedia file to the WFD source.

If the RTSP M7 request message is received, the WFD source responds with RTSP M7 response message and is able to send the multimedia file to the WFD sink in non-transcoded mode. In particular, the WFD source can stream the multimedia file to the WFD sink without transcoding.

If the play of the multimedia file streamed in the non-transcoded mode is ended or a user input of requesting a play end of the multimedia file is received, the WFD source can request the WFD sink to switch to the real-time encoded mode from the non-transcoded mode. If the WFD sink accepts the operation mode transition request from the WFD source, the WFD source can proceed to the streaming in real-time operation mode.

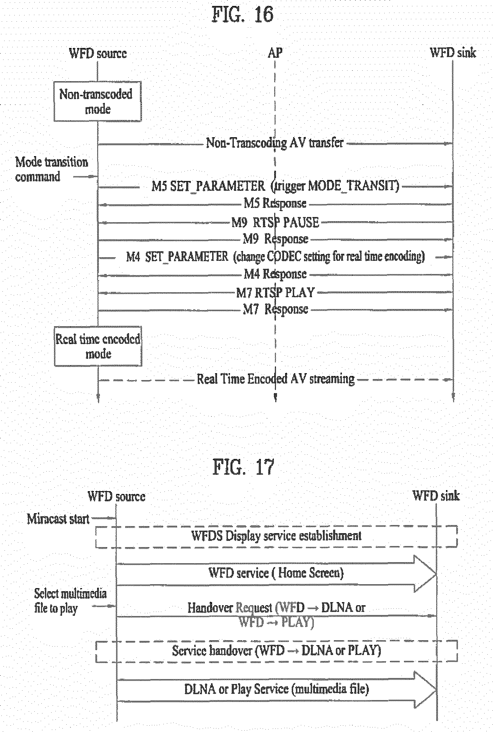

FIG. 16 is a diagram to show a detailed example that an operating mode between WFD source and WFD sink is changed into a real-time encoded mode from a non-transcoded mode.

If a play of a multimedia file streamed in non-transcoded mode is ended or a user input of requesting a play end of the multimedia file is received, the WFD source can send RTSP M5 request message including a mode transition method to the WFD sink. Having received the RTSP M5 request message including the mode transition method, the WFD sink responds with RTSP M5 response message and is able to send RTSP M9 request message (RTSP Pause request message) for pausing the streaming to the WFD source.

If the RTSP M9 request message is received, the WFD source responds with RTSP M9 response message and is able to pause the streaming. If the streaming is paused, the WFD source can send RTSP M4 request message (RTSP SET_PARAMETER request message) indicating parameters, which are changed according to the transition to the real-time encoded mode, to the WFD sink. Codec information to be used in the real-time encoded mode and the like can be included in the RTSP M4 request message.

If the RTSP M4 request message is received, the WFD sink can respond with RTSP M4 response message. Thereafter, the WFD sink can send RTSP M7 request message (RTSP PLAY request message) for requesting a start of real-time streaming to the WFD source.

If the RTSP M7 request message is received, the WFD source responds with RTSP M7 response message and is able to perform the streaming by encoding audio/video data in the real-time encoded mode by common codec and then sending the encoded audio/video data to the WFD sink.

In the course of WFT capability negotiation procedure with the WFD sink or WFD service discovery process, the WFD source can check whether the WFD sink supports the mode transition to the non-transcoded mode from the real-time encoded mode.

In particular, through the exchange of at least one of the RTSP M3 message and the RTSP M4 message, the WFD source can check whether the WFD sink supports the mode transition.

For instance, a new RTSP parameter (wfd_mode_transition) querying a presence or non-presence of the mode transition of the WFD sink can be inserted in at least one of the RTSP M3 message and the RTSP M4 message.

### Service Handover

Once WFD session is established, WFD source encodes its real-time output screen by common codec and is able to send encoded data to WFD sink. In doing so, if a play of a multimedia file playable by the WFD sink is requested, the WFD source can send the play requested multimedia file to the WFD sink instead of performing transcoding (i.e., conversion by common codec) of the multimedia file.

To this end, the WFD source and the WFD sink pause WFD service and are able to make handover into a service capable of file transmission. In particular, the WFD source and the WFD sink can make handover into PLAY service selected from a file transmission capable DNLA (digital living network alliance) service and a Wi-Fi Direct service (WFDS).

FIG. 17 is a diagram to describe one example of performing a handover to DNLA from WFD service. As a device and service discovery procedure and a capability negotiation procedure proceed, if WFD session is established, WFD source encodes its real-time output screen by common codec and then transmits it to WFD sink. By decoding the encoded data received from the WFD source by common codec, the WFD sink can perform streaming.

Thereafter, if a user input of requesting a play of a multimedia file is received, the WFD source can determine whether the play requested multimedia file is playable by the WFD sink. In particular, the WFD source can determine whether the play requested multimedia file can be played by the WFD source based on codec information supported by the WFD sink. If the play requested multimedia file is a video file, the WFD source may determine whether the multimedia file is playable by the WFD source in further consideration of profile and level information of codec in addition to codec of video playable by the WFD sink.

If the play requested multimedia file is playable by the WFD sink, the WFD source can make a request for a service handover to the WFD sink.

If WFD service is switched to WFDS play service or DNLA, the WFD source can stream the multimedia file to the WFD sink without transcoding.

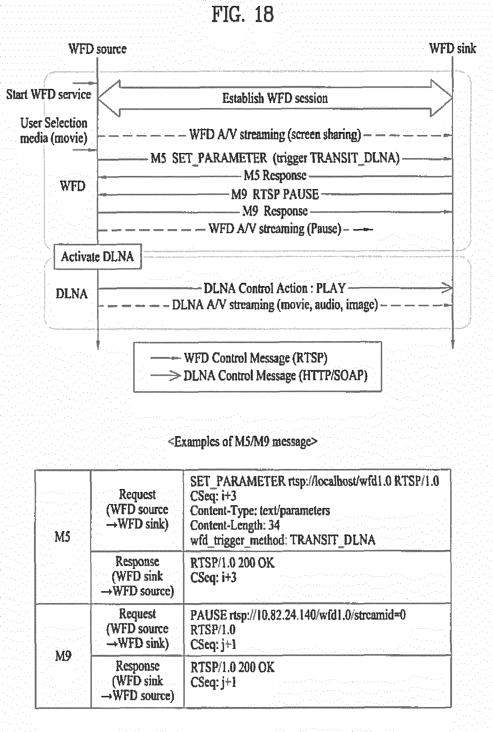

FIG. 18 is a diagram to show one example of starting DNLA after pausing WFD service.

While WFD source performs real-time streaming to WFD sink, if a user input of requesting a play of a multimedia file is received, WFD source can determine whether the play requested multimedia file is playable by WFD sink.

If the play requested multimedia file is not playable by the WFD sink (e.g., the multimedia file is compressed by codec not supported by the WFD sink, or the multimedia file has resolution not supported by the WFD sink), the WFD source can proceed to the streaming to the WFD sink using common codec through transcoding of the multimedia file in WFD service.

On the contrary, if the play requested multimedia file is playable by the WFD sink, the WFD source can send RTSP M5 request message for requesting mode transition to DNLA. To this end, between the WFD source and the WFD sink, a new method called 'DNLA transition (TRANSIT_DNLA) for triggering transition to DNLA can be defined.

Having received the RTSP M5 request message including the DNLA transition method, the WFD sink responds with RTSP M5 response message and is able to send RTSP M9 request message (RTSP PAUSE request message) for pausing real-time streaming to the WFD source.

If the RTSP M9 request message is received, the WFD source responds with RTSP M9 response message and is able to pause the real-time streaming. If the real-time streaming is paused, the WFD source activates DNLA and is able to perform WFD synchro streaming on the multimedia content without transcoding through Play action of HTTP/SOAP that is DNLA control protocol.

Thereafter, if the play of the multimedia file streamed under DNLA is ended or a user input of requesting a play end of the multimedia file is received, the WFD source can request the WFD sink to switch to WFD service from DNLA service.

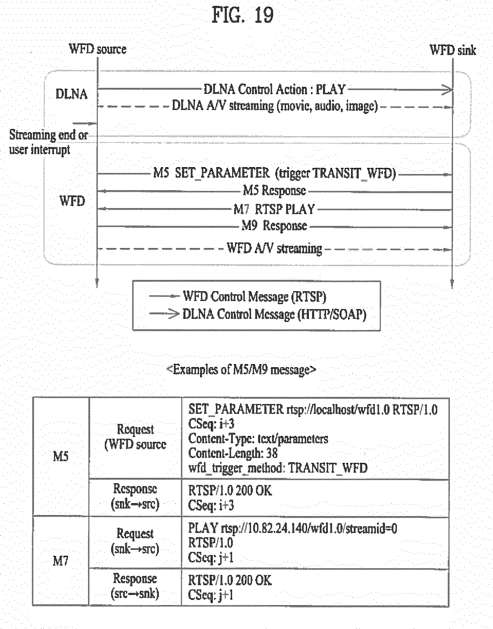

FIG. 19 is a diagram to show one example of resuming WFD service. If a play of a multimedia file streamed under DNLA is ended or a user input of requesting a play end of the multimedia file is received, WFD source can send RTSP M5 request message, which is provided to make a request for transition to WFD service, to WFD sink. To this end, between the WFD source and the WFD sink, a new method called 'WFD transition (TRANSIT_WFD) for triggering transition to WFD service can be defined.

Having received the RTSP M5 request message including the WFD transition method, the WFD sink responds with RTSP M5 response message and is able to send RTSP M7 request message (RTSP PLAY request message) for resuming the paused real-time streaming to the WFD source.

Having received the RTSP M7 request message, the WFD source responds with RTSP M7 response message and is able to resume the real-time streaming under WFD service.

In the course of WFD capability negotiation procedure with the WFD sink or WFD service discovery process, the WFD source can check whether the WFD sink supports the transition to DNLA from the WFD service.

In particular, through the exchange of at least one of RTSP M3 message and RTSP M4 message, the WFD source can check whether the WFD sink supports the transition to DNLA from the WFD service.

For instance, in at least one of RTSP M3 message and RTSP M4 message, a new RTSP parameter 'wfd_mode_transition' querying whether the WFD sink is capable of transition to DNLA from WFD service can be inserted. Table 2 in the following is provided to describe a parameter 'wfd_mode_transition'.

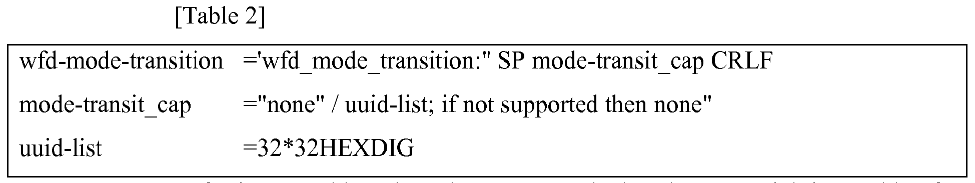

Referring to Table 2, in order to query whether the WFD sink is capable of transition to DNLA from WFD service, the WFD source can use the wfd_mode_transition parameter.

The WFD sink equipped with the corresponding capability can respond with UUID-LIST (Unique User Identifier-List) of 32^{∗}32 HEXDIG. The WFD sink failing to be equipped with the corresponding capability can respond with 'none'.

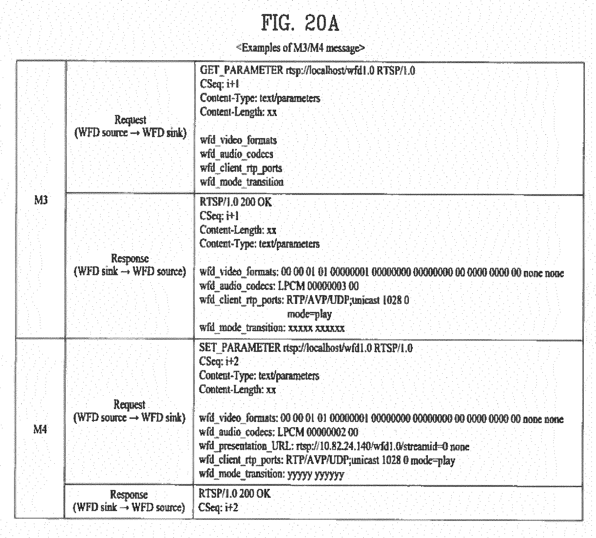

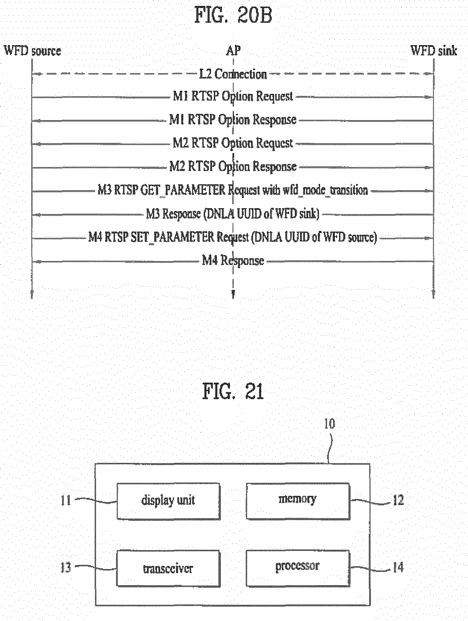

FIG. 20A and FIG. 20B are diagrams to describe a process for checking whether WFD sink has capability of transition to DNLA from WFD service in a capability negotiation procedure.

After the successful exchange of RTSP M1 message and RTSP M2 message, WFD source can send RTSP M3 request message, in which a list of capabilities to be obtained is specified, to WFD sink. Referring to FIG. 20A, in RTSP M3 request message, parameter (wfd_video_formats) for checking a video format supported by the WFT sink, parameter (wfd_audio_codecs) for checking audio codec supported by the WFD sink, parameter (wfd_client_rtp_ports) for checking a port number of the WFD sink to be used for RTP, and parameter (wfd_mode_transition) for checking whether the WFD sink supports the service transition are included for example.

Having received the RTSP M3 request message, the WFD sink can respond with RTSP M3 response message indicating WFD capabilities requested by the WFD source. According to the example shown in FIG. 20A, in response to the RTSP M3 request message, the WFD sink sends the RTSP M3 response message including a video format supported by the WFD sink, an audio codec supported by the WFD sink, a port number to be used for RTP and a capability for a presence or non-presence of service transition support.

In this case, if the transition to DLNA from WFD service is supported, the WFD sink can configure the RTSP M3 response message to contain DLNA UUID of its own. On the contrary, if the transition to DLNA from WFD service is not supported, the WFD sink can exchange the RTSP M3 response message containing a text ring (e.g., 'none') having the meaning of not supporting the transition to DLNA from WFD service.

If the capability of the WFD sink is confirmed through the successful exchange of the RTSP M3 message, the WFD source can determine a parameter set to be used between the WFD source and the WFD sink during WFD session. For instance, according to the example shown in FIG. 20A, RTSP M4 request message includes parameter (wfd_video_formats) for checking a video format to be used during WFD session, parameter (wfd audio_codecs) for checking audio codec to be used during WFD session, and parameter (wfd_client_rtp_ports) for checking a port number of WFD sink to be used for RTP during WFD session.

In addition, if it is confirmed that the WFD sink has the capability of support of the transition to DLNA from WFD service through the exchange of the RTSP M3 message, the WFT source can configure RTSP M4 request message containing DLNA UUID of the WFT source. According to the example shown in FIG. 20A, a parameter (wfd mode transition) for checking DLNA UUID of the WFD source is included in the RTSP M4 request message.

Having received the RTSP M4 request message from the WFD source, the WFD sink can respond with RTSP M4 response message. If the RTSP M4 message is successfully exchanged, WFD session is established between the WFD source and the WFD sink and the streaming operation described with reference to FIGs. 17 to 19 may be performed.

According to the examples shown in FIGs. 17 to 20, the WFD source and the WFD sink pause the WFD service and start DLNA. Instead of pausing the WFD service and starting DLNA, the WFD source and the WFD sink pause WFD service and may start a play service in WFDS.

FIG. 21 is a block diagram for configurations of a radio device according to one embodiment of the present invention.

A radio device 10 may include a display unit 11, a memory 12, a transceiver 13 and a processor 14. The transceiver 13 may transmit/receive radio signals and is able to implement a physical layer according to IEEE 802 system for example. The display unit 11 plays a role in outputting information. WFD source can encode the information outputted to the display unit 11 by common codec. WFD sink decodes data received from the WFD source and is able to output the decoded data.

The processor 14 is connected to the transceiver 13 electrically and is able to implement a physical layer and/or a MAC layer according to IEEE 802 system. And, the processor 14 can be configured to perform operations of encoding and decoding of audio/video for WFD service. Moreover, a module configured to implement operations of the radio device according to various embodiments of the present invention mentioned in the foregoing description may be saved to the memory 12 and can be launched by the processor 14. The memory 12 may be included inside the processor 14 or installed outside the processor 14 and can be then connected to the processor 14 by a means known to the public. Besides, the radio device 10 may further include an audio output unit configured to output audio.

The detailed configurations of the radio device 10 shown in FIG. 21 may be implemented in a manner that the matters of the various embodiments of the present invention mentioned in the foregoing description are independently applicable or that at least two of the various embodiments of the present invention are simultaneously applicable. And, duplicate contents may be omitted for clarity.

The aforementioned embodiments of the present invention may be implemented using various means. For instance, embodiments of the present invention can be implemented using hardware, firmware, software and/or any combinations thereof.

In case of the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known to the public.

As mentioned in the foregoing description, the detailed descriptions for the preferred embodiments of the present invention are provided to be implemented by those skilled in the art. While the present invention has been described and illustrated herein with reference to the preferred embodiments thereof, it will be apparent to those skilled in the art that various modifications and variations can be made therein without departing from the scope of the invention as defined by the appended claims. Therefore, the present invention is non-limited by the embodiments disclosed herein but by the scope as defined by the appended claims.

### INDUSTRIAL APPLICABILITY

Various embodiments of the present invention mentioned in the foregoing description are mainly described centering on Wi-Fi Direct system and may be further applicable to various kinds of mobile communication systems in the same manner.

## Claims

1. A method of performing Wi-Fi Display, WFD, service in a WFD source device (202), the method comprising:
displaying a first multimedia file in real-time on the WFD source device;
streaming the first multimedia file displayed in real-time to a WFD sink device (204), wherein the first multimedia file displayed in real-time is encoded by a common codec supported by the WFD source device and the WFD sink device when the first multimedia file displayed in real-time is streamed to the WFD sink device;
receiving a request for playing a second multimedia file in the course of the WFD service;
determining whether the second multimedia file is able to be directly played by the WFD sink device;
the method **characterized in that**:
further to determining that the second multimedia file is able to be directly played by the WFD sink device, transmitting the second multimedia file to the WFD sink device and streaming the second multimedia file without transcoding; and
further to determining that the second multimedia file is not able to be directly played by the WFD sink device, streaming the second multimedia file to the WFD sink device using transcoding of the second multimedia file.

2. The method of claim 1, wherein if the WFD source device switches the streaming from the first multimedia file to the second multimedia file, the WFD source device pauses the displaying of the first multimedia file and streams the second multimedia file to the WFD sink device, and
wherein if the streaming of the second multimedia file is paused, the WFD source device resumes the displaying of the first multimedia file and the streaming of the first multimedia file displayed in real-time to the WFD sink device.

3. The method of claim 1, wherein the WFD sink device is operated in a first operation mode when a multimedia file displayed in real-time on the WFD source device is streamed to the WFD sink device by transcoding the multimedia file based on the common codec, and wherein the WFD sink device is operated in a second operation mode when the multimedia file is streamed without transcoding.

4. The method of claim 3, wherein the WFD source device receives from the WFD sink device an information on whether the WFD sink device has capability of a transition from the first operation mode to the second operation mode.

5. The method of claim 1, further comprising : requesting the WFD sink device to make a transition from the WFD service for streaming a multimedia file displayed in real-time on the WFD source device to a prescribed service for transmitting and streaming the multimedia file when the second multimedia file is playable by the WFD sink device.

6. The method of claim 5, wherein the prescribed service comprises either digital living network alliance, DLNA, or a play service.

7. The method of claim 6, wherein the WFD source device receives from the WFD sink an information on whether the WFD sink device has capability of making a transition from the WFD service to the DLNA.

8. The method of claim 7, wherein the information comprises DLNA unique user identifier, UUID, of the WFD sink device.

9. The method of claim 8, wherein if the information is received, the WFD source device sends the WFD sink device a message including the DLNA UUID of the WFD source device.

10. In performing Wi-Fi Display, WFD, service, a WFD source device (202) comprising; a display unit (11);
a transceiver (13); and a processor (14) which is configured to control the display unit (11) and the transceiver (13), wherein the processor (14) is further configured to:
display a first multimedia file in real-time on the display unit (11), stream the first multimedia file displayed in real-time to a WFD sink device (204), wherein the first multimedia file displayed in real-time is encoded by a common codec supported by the WFD source device and the WFD sink device when the first multimedia file displayed in real-time is streamed to the WFD sink device;
receive a request for playing a second multimedia file in the course of the WFD service;
wherein the device is characterized for being its processor further configured to:
determine whether the second multimedia file is able to be directly played by the WFD sink device;
further to determining that the second multimedia file is able to be directly played by the WFD sink device, transmit the second multimedia file to the WFD sink device and stream the second multimedia file without transcoding; and
further to determining that the second multimedia file is not able to be directly played by the WFD sink device, stream the second multimedia file to the WFD sink device using transcoding of the second multimedia file.

## Patentansprüche

1. Verfahren zur Durchführung eines Wi-Fi-Anzeige-, WFD-, Dienstes in einer WFD-Quellvorrichtung (202), wobei das Verfahren aufweist:
Anzeigen einer ersten Multimedia-Datei in Echtzeit auf der WFD-Quellvorrichtung;
Streamen der ersten Multimedia-Datei, die in Echtzeit angezeigt wird, auf eine WFD-Senkenvorrichtung (204),
wobei die erste Multimedia-Datei, die in Echtzeit angezeigt wird, durch einen gemeinsamen Codec kodiert wird, der von der WFD-Quellvorrichtung und der WFD-Senkenvorrichtung unterstützt wird, wenn die erste Multimedia-Datei, die in Echtzeit angezeigt wird, auf die WFD-Senkenvorrichtung gestreamt wird;
Empfangen einer Anforderung zum Abspielen einer zweiten Multimedia-Datei im Verlauf des WFD-Dienstes;
Bestimmen, ob die zweite Multimedia-Datei fähig ist, direkt durch die WFD-Senkenvorrichtung abgespielt zu werden;
wobei das Verfahren **dadurch gekennzeichnet ist, dass**:
ferner bestimmt wird, dass die zweite Multimedia-Datei fähig ist, direkt durch die WFD-Senkenvorrichtung abgespielt zu werden, die zweite Multimedia-Datei an die WFD-Senkenvorrichtung übertragen wird und die zweite Multimedia-Datei ohne Umkodieren gestreamt wird; und
ferner bestimmt wird, dass die zweite Multimedia-Datei nicht fähig ist, direkt durch die WFD-Senkenvorrichtung abgespielt zu werden, die zweite Multimedia-Datei unter Verwendung einer Umkodierung der zweiten Multimedia-Datei auf die WFD-Senkenvorrichtung gestreamt wird.

2. Verfahren nach Anspruch 1, wobei die WFD-Quellvorrichtung die Anzeige der ersten Multimedia-Datei stoppt, wenn die WFD-Quellvorrichtung das Streamen von der ersten Multimedia-Datei auf die zweite Multimedia-Datei wechselt, und die zweite Multimedia-Datei auf die WFD-Senkenvorrichtung streamt, und
wobei die WFD-Quellvorrichtung die Anzeige der ersten Multimedia-Datei wiederaufnimmt, wenn das Streamen der zweiten Multimedia-Datei gestoppt wird, und das Streamen der ersten Multimedia-Datei in Echtzeit an der WFD-Senkenvorrichtung angezeigt wird.

3. Verfahren nach Anspruch 1, wobei die WFD-Senkenvorrichtung in einer ersten Betriebsart betrieben wird, wenn eine Multimedia-Datei, die in Echtzeit auf der WFD-Quellvorrichtung angezeigt wird, auf die WFD-Senkenvorrichtung gestreamt wird, indem die Multimedia-Datei basierend auf dem gemeinsamen Codec umkodiert wird, und wobei die WFD-Senkenvorrichtung in einer zweiten Betriebsart betrieben wird, wenn die Multimedia-Datei ohne Umkodieren gestreamt wird.

4. Verfahren nach Anspruch 3, wobei die WFD-Quellvorrichtung von der WFD-Senkenvorrichtung eine Information darüber empfängt, ob die WFD-Senkenvorrichtung die Fähigkeit zu einem Übergang von der ersten Betriebsart auf die zweite Betriebsart hat.

5. Verfahren nach Anspruch 1, das ferner aufweist: Auffordern der WFD-Senkenvorrichtung, einen Übergang von dem WFD-Dienst zum Streamen einer Multimedia-Datei, die in Echtzeit auf der WFD-Quellvorrichtung angezeigt wird, auf einen vorgeschriebenen Dienst zum Übertragen und Streamen der Multimedia-Datei vorzunehmen, wenn die zweite Multimedia-Datei von der WFD-Senkenvorrichtung abspielbar ist.

6. Verfahren nach Anspruch 5, wobei der vorgeschriebene Dienst entweder einen Digital Living Network Alliance-, DLNA-, oder einen Abspieldienst aufweist.

7. Verfahren nach Anspruch 6, wobei die WFD-Quellvorrichtung von der WFD-Senke eine Information darüber empfängt, ob die WFD-Senkenvorrichtung die Fähigkeit hat, einen Übergang von dem WFD-Dienst auf DLNA vorzunehmen.

8. Verfahren nach Anspruch 7, wobei die Information eine eindeutige DLNA-Benutzerkennung, UUID, der WFD-Senkenvorrichtung aufweist.

9. Verfahren nach Anspruch 8, wobei die WFD-Quellvorrichtung, wenn die Information empfangen wird, der WFD-Senkenvorrichtung eine Nachricht sendet, welche die DLNA-UUID der WFD-Quellvorrichtung enthält.

10. Beim Durchführen eines Wi-Fi-Anzeige-, WFD-, Dienstes eine WFD-Quellvorrichtung (202), die aufweist:
eine Anzeigeeinheit (11);
einen Transceiver (13); und
einen Prozessor (14), der konfiguriert ist, um die Anzeigeeinheit (11) und den Transceiver (13) zu steuern,
wobei der Prozessor (14) ferner konfiguriert ist, um:
eine erste Multimedia-Datei in Echtzeit auf der Anzeigeeinheit (11) anzuzeigen,
die erste Multimedia-Datei, die in Echtzeit angezeigt wird, auf eine WFD-Senkenvorrichtung (204) zu streamen,
wobei die erste Multimedia-Datei, die in Echtzeit angezeigt wird, durch einen gemeinsamen Codec kodiert wird, der von der WFD-Quellvorrichtung und der WFD-Senkenvorrichtung unterstützt wird, wenn die erste Multimedia-Datei, die in Echtzeit angezeigt wird, auf die WFD-Senkenvorrichtung gestreamt wird;
eine Anforderung zum Abspielen einer zweiten Multimedia-Datei im Verlauf des WFD-Dienstes zu empfangen;
wobei die Vorrichtung **dadurch gekennzeichnet ist, dass** ihr Prozessor ferner konfiguriert ist, um:
zu bestimmen, ob die zweite Multimedia-Datei fähig ist, direkt durch die WFD-Senkenvorrichtung abgespielt zu werden;
ferner zu bestimmen, dass die zweite Multimedia-Datei fähig ist, direkt durch die WFD-Senkenvorrichtung abgespielt zu werden, die zweite Multimedia-Datei an die WFD-Senkenvorrichtung zu übertragen und die zweite Multimedia-Datei ohne Umkodieren zu streamen; und
ferner zu bestimmen, dass die zweite Multimedia-Datei nicht fähig ist, direkt durch die WFD-Senkenvorrichtung abgespielt zu werden, die zweite Multimedia-Datei unter Verwendung einer Umkodierung der zweiten Multimedia-Datei auf die WFD-Senkenvorrichtung zu streamen.

## Revendications

1. Procédé d'exécution d'un service d'affichage Wifi, WFD, dans un dispositif source WFD (202), le procédé comprenant :
l'affichage d'un premier fichier multimédia en temps réel sur le dispositif source WFD;
la diffusion en continu du premier fichier multimédia affiché en temps réel à un dispositif récepteur WFD (204),
dans lequel le premier fichier multimédia affiché en temps réel est encodé par un codec commun pris en charge par le dispositif source WFD et le dispositif récepteur WFD quand le premier fichier multimédia affiché en temps réel est diffusé en continu vers le dispositif récepteur WFD ;
la réception d'une demande de lecture d'un deuxième fichier multimédia au cours du service WFD ;
le fait de déterminer si le deuxième fichier multimédia est en mesure d'être lu directement par le dispositif récepteur WFD ;
le procédé étant **caractérisé par** :
sur détermination que le deuxième fichier multimédia est en mesure d'être lu directement par le dispositif récepteur WFD, la transmission du deuxième fichier multimédia au dispositif récepteur WFD et la diffusion en continu du deuxième fichier multimédia sans transcodage ; et
sur détermination que le deuxième fichier multimédia n'est pas en mesure d'être lu directement par le dispositif récepteur WFD, la diffusion en continu du deuxième fichier multimédia au dispositif récepteur WFD en utilisant un transcodage du deuxième fichier multimédia.

2. Procédé selon la revendication 1, dans lequel, si le dispositif source WFD commute la diffusion en continu du premier fichier multimédia au deuxième fichier multimédia, le dispositif source WFD interrompt l'affichage du premier fichier multimédia et diffuse en continu le deuxième fichier multimédia au dispositif récepteur WFD, et
dans lequel, si la diffusion en continu du deuxième fichier multimédia est interrompue, le dispositif source WFD reprend l'affichage du premier fichier multimédia et la diffusion en continu du premier fichier multimédia affiché en temps réel au dispositif récepteur WFD.

3. Procédé selon la revendication 1, dans lequel le dispositif récepteur WFD est utilisé dans un premier mode de fonctionnement quand un fichier multimédia affiché en temps réel sur le dispositif source WFD est diffusé en continu au dispositif récepteur WFD en transcodant le fichier multimédia sur la base du codec commun, et dans lequel le dispositif récepteur WFD est utilisé dans un deuxième mode de fonctionnement quand le fichier multimédia est diffusé en continu sans transcodage.

4. Procédé selon la revendication 3, dans lequel le dispositif source WFD reçoit à partir du dispositif récepteur WFD une information sur le fait que le dispositif récepteur WFD a une capacité d'une transition du premier mode de fonctionnement au deuxième mode de fonctionnement.

5. Procédé selon la revendication 1, comprenant en outre : la demande au dispositif récepteur WFD d'effectuer une transition du service WFD pour la diffusion en continu d'un fichier multimédia affiché en temps réel sur le dispositif source WFD vers un service prescrit pour transmettre et diffuser en continu le fichier multimédia quand le deuxième fichier multimédia peut être lu par le dispositif récepteur WFD.

6. Procédé selon la revendication 5, dans lequel le service prescrit comprend soit une alliance de réseau actif numérique, DLNA, ou un service de jeu.

7. Procédé selon la revendication 6, dans lequel le dispositif source WFD reçoit à partir du récepteur WFD une information sur le fait que le dispositif récepteur WFD a une capacité d'effectuer une transition du service WFD au DLNA.

8. Procédé selon la revendication 7, dans lequel les informations comprennent un identificateur d'utilisateur unique, UUID, de DLNA du dispositif récepteur WFD.

9. Procédé selon la revendication 8, dans lequel, si l'information est reçue, le dispositif source WFD envoie au dispositif récepteur WFD un message incluant l'UUID de DLNA du dispositif source WFD.

10. Dans l'exécution d'un service d'affichage Wifi, WFD, dispositif source WFD (202) comprenant :
une unité d'affichage (11) ;
un émetteur-récepteur (13) ; et
un processeur (14) qui est configuré pour contrôler l'unité d'affichage (11) et
l'émetteur-récepteur (13),
dans lequel le processeur (14) est configuré en outre pour :
afficher un premier fichier multimédia en temps réel sur l'unité d'affichage (11), diffuser en continu le premier fichier multimédia affiché en temps réel à un dispositif récepteur WFD (204),
dans lequel le premier fichier multimédia affiché en temps réel est codé par un codec commun pris en charge par le dispositif source WFD et le dispositif récepteur WFD quand le premier fichier multimédia affiché en temps réel est diffusé en continu vers le dispositif récepteur WFD ;
recevoir une demande de lecture d'un deuxième fichier multimédia au cours du service WFD ;
dans lequel le dispositif est **caractérisé en ce que** son processeur est en outre configuré pour :
déterminer si le deuxième fichier multimédia est en mesure d'être lu directement par le dispositif récepteur WFD ;
sur détermination que le deuxième fichier multimédia est en mesure d'être lu directement par le dispositif récepteur WFD, transmettre le deuxième fichier multimédia au dispositif récepteur WFD et diffuser en continu le deuxième fichier multimédia sans transcodage ; et
sur détermination que le deuxième fichier multimédia n'est pas en mesure d'être lu directement par le dispositif récepteur WFD, diffuser en continu le deuxième fichier multimédia au dispositif récepteur WFD en utilisant un transcodage du deuxième fichier multimédia.
